# EUROPEAN PATENT SPECIFICATION

(11) **EP 3 206 997 B1**
(45) Date of publication and mention of the grant of the patent: **09.01.2019**
(21) Application number: 15804945.2
(22) Date of filing: 19.10.2015
(51) Int. Cl.: A01C 3/02, C05C 3/00, C05G 3/00

(54) **METHOD FOR TREATMENT OF POULTRY MANURE**
VERFAHREN ZUR BEHANDLUNG VON GEFLÜGELMIST
PROCÉDÉ POUR LE TRAITEMENT DE FUMIER DE VOLAILLE

(30) Priority: 17.10.2014 IT UD20140166
(43) Date of publication of application: 23.08.2017
(73) Proprietor: Massai Giordano S.r.l., 58100 Grosseto (IT)
(72) Inventor: MASSAI, Alessandro, I-58100 Grosseto (IT)
(74) Representative: Petraz, Davide Luigi
(86) International application number: PCT/IB2015/058036
(87) International publication number: WO 2016/059621

(56) References cited:
- EP-A1- 2 208 712
- EP-A1- 2 565 256
- WO-A1-2011/072369
- WO-A1-2013/000928
- WO-A1-2013/060338
- WO-A2-2012/152266
- DE-A1- 10 353 728
- US-A1- 2008 277 336
- US-B1- 8 673 046

## Description

### FIELD OF THE INVENTION

Forms of embodiment described here concern a plant and a method for treating poultry manure. In particular, forms of embodiment are provided of a plant and a method for treating and conditioning poultry manure in order to make it more digestible in the process of anaerobic digestion and with the purpose of recovering the nitrogen initially contained therein, in particular for agronomic uses.

### BACKGROUND OF THE INVENTION

It is known that poultry manure is excreta from poultry that must be disposed of carefully. At present the problem of disposing of poultry manure is a worldwide problem, if one considers the increased production of chicken meat and hence the consequent increase of said excreta, not only in Europe and America, but also in Asia. For example, in India a million tons of poultry manure are produced every year.

One known disposal system is to spread the effluent of poultry manure in the ground, but this is not a good environmental practice, since the excess nitrogen and phosphorus contained therein can cause problems of accelerated eutrophication. The activity of nitrifying bacteria causes the ammonia salts to be transformed into nitrates which, being more soluble in water, can contaminate the water tables under the ground where the effluent is poured, and can even cause eutrophication in lakes and seas. The ammonia released into water environments then becomes toxic for the fish, given that it leads to a reduction in the oxygen dissolved in the water. Suffice it to say that, to limit this problem, in Italy there are specific regulations on nitrates which limit the quantity of nitrogen that can be spread annually, especially in those areas, such as the Po valley, that are critical areas subject to the risk of eutrophication.

On the contrary, composting poultry manure - which is another way to dispose of the effluent - provides a biological decomposition of the organic material, carried out by enzymes (starch hydrolase, dehydrogenases, cellulases, nitrogenases). Although this practice does not cause any emission into the atmosphere of pollutants such as NOₓ, CO, SO₂, dioxins, heavy metals and furans, it does however cause emissions of ammonia (at least 70% of the nitrogen contained in poultry manure is thus transformed and volatized) and CO₂, with a consequent loss of the organic carbon (from 40 to 70%) and the organic nitrogen initially present in the effluent. At the end of the composting process, the litter becomes a dry substance greater than 50% and a higher carbon/nitrogen (C/N) ratio than at the start of the process, but in any case less than 10, precisely due to the loss of nitrogen in the form of volatized ammonia.

Other known methods practiced to dispose of poultry manure are heat processes such as pyrolysis, gasification, combustion. Indeed, poultry manure has quite a high calorific power, about 3500-3800 Kcal/Kg, whereas wood for example has a calorific power of 4400-5200 Kcal/Kg. These methods are not very sustainable from an environmental point of view, since they produce ashes and emit toxic contaminants, in particular polycyclic hydrocarbons, dioxins, heavy metals, nitrogen oxides, carbon monoxide and sulfur dioxide.

Another known disposal system is anaerobic digestion of the poultry manure. Anaerobic digestion plants with the production of methane for energy use are more energy efficient and have less environmental impact compared with disposal systems described heretofore. They allow to obtain energy from almost all the organic substance present therein, they prevent the emission of NO_{X}, CO, SO₂, dioxins, heavy metals and furans which are caused, on the contrary, by gasification, combustion and pyrolysis, they allow to recover micro- and macro-elements (N, S, K, P, etc.) by using the effluents of digestion as fertilizers and/or to recover nitrogen, phosphorus, potassium and sulfur by specific treatments, and therefore allow to create an export market of nitrogen fertilizers.

In general, one big problem of poultry manure is the high nitrogen content. In fact, of all the excreta produced by breeding animals, poultry manure is the one that is richest in nitrogen and this, especially in anaerobic digestion, makes it impossible to use, both alone and in high quantities, unless it is compensated by co-digestion with substances that are very rich in carbon. Poultry manure from laying hens can have a carbon/nitrogen ratio that varies from 1.5 to 6. Most of the nitrogen present in the poultry manure is in organic form (uric acid, urea, undigested proteins) but, during anaerobic digestion, the basic pH (7.5-8.0) and the high temperatures (40-55°C) encourage the transformation thereof into ammoniacal nitrogen, which is highly toxic for methanogen bacteria. It would therefore be preferable to have an average composition of the poultry manure with a lower nitrogen content, which moves the C/N ratio at least to 13, for example 19% carbon and 1.45% nitrogen in a dry substance. Ammoniacal nitrogen starts to become critical when its concentration in the digestate exceeds 2000 mg/L, given that this also entails an increase in the free ammonia, which is responsible for irreversible inhibitions of the activity of methanogen bacteria. It is for this reason that it would be desirable to obtain an average composition of the poultry manure treated with a lower nitrogen content and hence a high C/N ratio.

Another problem is the presence of inert substances in the poultry manure, mostly small stones containing calcium or fragments of shells used to help digestion, and feathers. Indeed, as they precipitate, these inert materials create deposits in the anaerobic digestion reactors, which then have to be cleaned and emptied quite often, entailing a loss in production of methane due to the time dedicated to emptying operations. On the contrary, feathers tend to deposit on the blades of the mixers or to remain suspended on the digestate, preventing the normal exit of the biogas, with very negative results.

Another problem is that poultry manure has a very high bacterial load, mainly consisting of *Salmonella spp, Escherichia Coli,* fecal coliforms, *Listeria Monocytogenes,* which could cause problems to the health of humans and animals and therefore it is necessary to reduce these pathogens.

One example of a plant for treating poultry manure is shown in US-A-2007/0101783, which explains the procedure tested to obtain liquid nitrogen fertilizer, that is, the extraction of nitrogen in a mainly ammonia form, and the subsequent conversion into nitrates using microbes. This known procedure is divided into the following key processes: 1) extraction of the nitrogen in water, 2) volatilization of the nitrogen in ammonia form, 3) absorption of the volatilized ammonia in a solid medium, 4) conversion of part of the ammonia into nitrate, using nitrifying bacteria. The extraction phase is generally carried out in a suitable reactor, by means of passive extraction, that is, without constant stirring; the addition of water is 1 volume of poultry manure for 10 volumes of water; the time tested for extraction is 14 days at ambient temperature (so varying in the hot and cold seasons). This solution allows to extract up to 59% of the nitrogen initially present in the poultry manure. The concentrations of uric acid in the extraction liquid are very high in the first two days and then decrease for all the remaining period. At the end of 14 days of extraction, almost all the uric acid is degraded into ammonium ions. The volatilization of part of the ammoniacal nitrogen occurs in a second reactor. It may provide to add lime to increase the pH and/or the temperature, and to allow mineralization of the organic nitrogen into ammoniacal nitrogen and partial volatilization in the form of ammonia gas. The absorption of the volatilized ammonia occurs by means of liquid supports or bio-solid supports (vermiculite, zeolite) which can contain nitrifying bacteria ready to convert ammonia into nitrates. Nitrifying bacteria can be suspended or bonded on said supports. If solid supports are used, it can then be provided to extract with water the nitrogen in nitrous form to be used as fertilizer. One disadvantage of this known treatment is the long duration of the extraction time, which especially entails the loss of organic substance usable for producing biogas. Another disadvantage is that the extraction process is not carried out at a constant temperature, but is connected to the seasonal variations in temperature. In fact, in US-A-2007/0101783, it says how the highest temperatures tested, due to the environmental variations, facilitate the nitrogen extraction process. Moreover, this process does not take into account the utility of the residual material of the extraction, that is, the nitrogen-poor material. The known treatment system uses enormous quantities of water, and no system is provided to recover it for future re-use. Another disadvantage of this known procedure is that at least 13-14% of the ammoniacal nitrogen already volatilizes during the 14 days of extraction, entailing a loss of nitrogen potentially usable as fertilizer. Moreover, during the nitrification process, care must be taken to convert most of the ammonia into nitrate and not into nitrite, which can cause problems to the environment.

On this point the international application WO-A-2009/086584 describes a process to remove nitrogen, mostly from liquids, entirely based on the biological dynamics of the two processes: nitrification and denitrification. Nitrification is carried out in aerobic conditions by autotrophic nitrifying bacteria, which use oxygen to convert the ammonia firstly into nitrite and subsequently into nitrate. The second process, denitrification, on the contrary takes place in anaerobiosis due to the action of heterotrophic bacteria which, as well as no oxygen, also require sources of electrons (organic material) to convert the nitrate into nitrogen gas. What is described in WO-A-2009/086584 is not advantageous in removing nitrogen since it in no way affects the loss of organic substance. This is because it provides a reduction of part of the COD (Chemical Oxygen Demand) due to the action of the denitrifying bacteria, it has an extremely long duration in time due to the low growth rate of the nitrifying bacteria, it is applied mainly to liquids with a maximum concentration of nitrogen of up to 500 mg/L. WO-A-2009/086584 describes a technique to physically separate nitrification from denitrification using two different reactors, to promote the growth of the two different bacterial types. The fluid is transferred from the reactor where nitrification takes place to the reactor where denitrification takes place, after a time useful for the action of the bacterial masses. The biomasses are present in the reactors in the form of biofilm, and one danger encountered in this process is that during the transfer of liquid from one reactor to the other there can be a partial run-off of the bacterial masses. To overcome this problem it is possible to use a separation membrane between the two reactors. In this solution, it is underlined that in the first nitrification reactor there is a danger of progressive reduction in the pH, therefore it is necessary to control it so as not to inhibit the nitrifying bacteria themselves. By circulating the waters to be treated from one reactor to the other this problem appears to be overcome, given that on the contrary the denitrifying bacteria cause an increase in the pH of the liquid. Using the process described in WO-A-2009/086584 at least 50% of ammoniacal nitrogen is converted into nitrogen gas.

One disadvantage of nitro-denitrification is that it requires a lot of oxygen and energy to convert the ammonium (NO⁴⁺) into nitrate (NO³⁻) and resources of carbon to convert the nitrate into nitrogen gas (N₂). One biological method that entails a great energy saving is the one that produces nitrogen gas directly from the nitrite ion (NO²⁻) by oxidizing ammonia in anaerobiosis. This process, known by the name of Anammox and described in WO-A-1998/007664, provides that the ammonium ion acts as an electron donor, using the nitrite ion as an acceptor. This process saves at least 50% oxygen and 100% of carbon resources, compared with nitro-denitrification. However, the limit consists of the slow growth rate of the Anammox bacteria, which is two weeks for replication.

The international application WO-A-2005/095009 describes a process to reduce and remove phosphorus and nitrogen from pig manure, and to eliminate the problem of unpleasant smell. Phosphorus and the molecules responsible for the smell are associated with the presence of the organic substance. Therefore, the effluent is acidified to a pH of 4.0 so as to promote the separation of the solid substances and especially to get rid of phosphorus and smelly substances. After this first treatment, the solid fraction is removed so as to obtain a liquid from it that is directed to a bioreactor to remove the ammonia. The bioreactor in question has two compartments, one aerobic and one anaerobic with ventilation. The liquid effluent sent into these two reactors has a pH almost near to neutral, tending to basic, and encounters the two well-known processes of nitrification and denitrification with the production of nitrogen gas that can be emitted into the atmosphere. At the same time oxidation takes place and hence reduction of the BOD (Biological Oxygen Demand) remaining suspended in the liquid. This process cannot be applied for the purposes of anaerobic digestion of the solid fraction because if the solid-liquid separation occurs by acidification, there is no transformation of the nitrogen (organic and inorganic) into ammonia, which remains mainly in the solid.

Belostotskiy et al. (2013) published a scientific article showing that during the anaerobic digestion of poultry manure alone it is possible to reduce the content of ammoniacal nitrogen, inhibiting the anaerobic digestion process, by stripping the ammonia, producing ammonium phosphate or sulfate as valuable sub-products. Their experiments have provided anaerobic digestion of poultry manure in mesophilia, given that lower temperatures reduce the quantity of organic nitrogen transformed into ammoniacal nitrogen. Furthermore, ammonia gas was stripped for 4 hours at 80°C, and at a pressure of 600 mbar, during which time the ammonia evaporates in the gaseous phase, is recovered by condensation and captured by sulfuric acid and phosphoric acid. Before stripping, the digested effluent was separated into a solid fraction and a liquid fraction by sieving. The liquid fraction was stripped, while the solid fraction was dried. The stripped liquid, with the reduced content of ammonia, was recirculated in the fermentator in order to lower the total concentration of ammonia in the fermentator. The disadvantage of this process is the reintroduction into circulation of a liquid containing a percentage of nitrogen, remaining after stripping, and hence a progressive accumulation of nitrogen in the digestate.

Another method that provides stripping of the ammonia by means of acid is described in application WO-A-2010/015928. This process is described as applicable to all animal effluents and provides at least a 50% reduction in the nitrogen content. The operating steps are, in sequence, putting the effluent into contact with an alkaline agent to cause an increase in its pH and to facilitate the formation of ammonia gas, to generate a current of ionized gas above the surface of the effluent that can capture the ammonia and transport it outside the reactor, to recover the ammonia from the gaseous current. The stripping current that contains the ammonia gas is treated in washing towers using acid solutions for the formation of ammonium salts. To absorb the ammonia it is preferable to use a water solution of inorganic acids. The saline ammonium solution can then be used as fertilizer. Once the acid solution has absorbed the ammonia, the purified gaseous current is conveyed into the atmosphere. The ionized gaseous current can consist of one or more gases, such as air, nitrogen and argon. The current exerts a very strong electrostatic attraction on the polar molecules of ammonia, and is able to capture them. The preferential pressure of the gas stream is between -10 and +10 mbar. The ionization system consists of a load generator. The quantity of basic granular agent added varies from 5 to 20 kg/m³, to reach a pH comprised between 10 and 13. To maximize the formation of ammonia gas, the effluent can be taken to a temperature of 80°C, but it was seen that at 50°C both the formation of foam and the precipitation of insoluble carbonates are avoided. The process can be carried out in a single reactor if it is discontinuous, or in several reactors if it is continuous mode: the wider the exchange surface between effluent and gaseous current, the more ammonia is extracted. Stirring the effluent (in this procedure in the range of 0.2-3.5 stirs per hour) also proved to have positive effects on the ammonia extraction compared with a total absence thereof. At the end of treatment, the effluent, deprived of a part of the nitrogen, must be subjected to pH correction before being spread in the fields. WO-A-2010/015928 also provides other alternatives to using acid solutions to capture ammonia, such as making the gaseous current containing ammonia converge in water, obtaining a solution of ammonium hydroxide, condensing the ammonia using condensation systems to obtain anhydrous ammonia, subjecting the current of gas containing ammonia to a disassociation process, with the formation of H₂ and N₂, liquefying the ammonia by dehydration and compression of the gaseous current. The disadvantage of this known method is that, since it does not give dilution to the mass of effluent, a large quantity of alkaline agent is needed to be added in order to raise the pH; moreover, this stripping method requires a lot of energy to make it function.

Furthermore, a system to pre-treat the poultry manure before anaerobic digestion has been made public. It is called NIX technology and operates with the following steps: a first cooking step at high temperatures and high pressures, with the addition of quicklime (CaO), recovery and condensation of ammonia gas, transformation into ammonium sulfate by adding sulfuric acid. The poultry manure thus treated is ready to be introduced into the primary digestor of the biogas production plant. The percentage of nitrogen removed is 50%, with a 25% reduction in organic nitrogen. The process can also provide a second cooking step to reduce the fraction of organic nitrogen by another 12%. One of the disadvantages of this process is that, although it leads to an increase in the biogas yield of about 25%, the loss of organic substance remains at around 20%. Furthermore, the cooking step, which provides to raise the temperature through hot steam, involves a high energy use.

Another example of a treatment system that recovers nitrogen from digestates in the form of anhydrous ammonia or in solution is described in US-A-8,637,304. The process is articulated in 4 steps: the first is a liquid/solid separation from the digestate in order to remove particulate, and a stripping of carbon dioxide from the effluent obtained after separation. Removing CO₂ allows to raise the pH from 7.5 to 8.3 which in turn facilitates the passage of the ammonia from its ionic form dissolved in liquid to the gaseous form. The gaseous form is the one that will be stripped later. To remove the CO₂ dissolved in the digestate, a gas can be used, such as air, in conditions of low temperature and low pH to prevent the dispersion of ammonia. In a second step, using a photo-bioreactor to remove carbon dioxide and bicarbonate allows to further raise the pH, by the growth of autotrophic organisms that feed on carbon sources. The pH is raised from 8.3 to 10.5. The third step described in US-A-8,637,304 provides to heat the liquid obtained in order to allow a greater conversion of the ammonium ion into ammonia, and then to strip the latter. The liquid is sent to the stripping unit that uses a stream of gas to strip the ammonia from the liquid; the stripping unit produces a liquid from which the ammonia has been removed, and a stream of gas enriched with water vapor and ammonia. In the fourth step the gas containing stripped ammonia is precipitated. The cooling of the gas produces an ammoniarich condensate or concentrate. If, during the condensation of the gas containing ammonia, biogas containing carbon dioxide is made to converge, solid ammonium bicarbonate can be obtained from the precipitation. The disadvantages of this process described in US-A-8,637,304 are connected to the use of photo-bioreactors for growing the microorganisms which feed on carbon. In fact, apart from being an expensive method, it is also delicate: the growth of microorganisms such as cyanobacteria requires that some parameters must be kept constant, such as temperature, pH, absence of pathogens, concentration of the microorganisms themselves, and turbidity of the growth medium. Furthermore, since high concentrations of ammonia are toxic for the microorganisms to be replicated, treatment with the photo-reactor can be applied only to digestates or leachates, and not to excreta as such. Another limitation of the system described in US-A-8,637,304 is the removal of carbon. The process cannot therefore be applied to excreta destined for anaerobic digestion, because carbon useful for the production of biogas is removed.

Another method for capturing ammonia is described in the patent application US-A-2011/0229403, and in the scientific article by Lauterbock et al. (2012). Both documents describe a method for the passage of ammonia gas through microporous hydrophobic membranes, permeable to gases, and capture by means of circulating acid solutions, with production of ammonium salts. While US-A-2011/0229403 refers to the positioning of the membrane in the environment surrounding the effluent, in the scientific article by Lauterbock et al. (2012) the membrane is located inside the effluent itself. The membranes allow the ammonia gas to pass from one side of the surface to the other. In contact with one of the surfaces there is an acid solution that captures the ammonia gas. The system described in US-A-2011/0229403 provides to use a tubular membrane with an entrance and an exit, in close communication with an acid solution by means of a pump. The ammonia gas enters from outside to inside the membrane. The acid solution is made to flow inside the membrane where it captures the ammonia gas. US-A-2011/0229403 specifies that the possibility is not excluded of adding alkalis to the effluent in order to increase the conversion of ammonium ion into ammonia gas. Lauterbock et al. (2012) refers to these membranes using the term "membrane-type contactors", but the principle on which the process is based is the same as that described in US-A-2011/0229403, and the percentage of nitrogen removal can reach 70%. Whereas the approach described in US-A-2011/0229403 does not provide any treatment of the effluent, given that the membrane is not in contact with it, Lauterbock's method provides to remove the particulate of the digestate in order to prevent the latter from blocking the pores of the membranes, which are the active sites for the passage of ammonia gas in the lumen of the membrane, where it is captured by a solution of sulfuric acid, conveyed inside the membrane. Generally, the working temperature is kept at 38°C.

The technology of membrane-type contactors offers many advantages compared to stripping carried out with a stream of gas, that is, less use of chemical products and less energy required. Membrane-type contactors are hydrophobic, microporous membranes which allow the mass transfer between two phases. The phases can be gas/liquid, liquid/liquid or liquid/gas/liquid. Two fundamental physical parameters have effects on the mass transfer of the free ammonia, the thickness of the membrane and the "bubble point", that is, the size of the pores, which determines the pressure needed to force an air bubble inside the pores of the membrane. By mass transfer we mean the different concentration of a molecule between aliment and permeate. The force that guides the mass transfer is the gradient of partial pressure of the gas (the free ammonia between aliment and absorbent solution). The two parameters of temperature and pressure also influence this pressure gradient (any increase in them promotes the diffusion of ammonia inside the pores of the membrane). During the removal of ammonia by the membrane-type contactor, a process of three steps takes place: the first is the diffusion of the ammonia gas on the entrance surface of the membrane pore, the second is the diffusion of the ammonia gas inside the membrane pore, the third is reaching the interface located at exit from the pore, where the absorbent solution (sulfuric acid) immediately converts the ammonia gas into ammonium ion. In a typical membrane-type contactor the membranes of hollow fibers are assembled in polypropylene containers, they have a very high density and require pre-treatment in order to remove particles that could block the system. This technology can reduce 70% of the ammonia on average, but the mass transfer is greatly influenced by the concentration of free ammonia: the higher the concentrations of ammonia, the lower the mass transfer coefficient of the free ammonia.

Another problem of this technology is "pore wetting". The greatest challenge for the application of membrane-type contactors on an industrial scale is to obtain continuity in the operation. To obtain this it is necessary to maintain a constant hydrophobic character of the membrane, keeping the absorption solution separate from the substrate and preventing the sulfuric acid from infiltrating into the reactors, or the absorption solution could become impure. "Pore wetting" therefore occurs when the two liquid phases enter into contact with each other inside the pores, causing an aggregation of particles on the surface of the membrane or inside the pores and forming a hydrophilic layer. Regular washing of the membrane can increase its duration.

US-B-7,419,589 describes a method to eliminate the typical smell of pig manure and which tries to recover recyclable water, bio-solids with added value and ammonia. The process provides to add calcium hydroxide to the excreta with the intention of raising pH, to stir it vigorously for several hours at negative pressure, to transform nitrogen into ammonia gas, and to capture the latter. The quantity of alkaline agent added depends on the pH to be reached. In particular, in US-B-7,410,589, from 5 g/L to 20 g/L of CaOH are added to preferably achieve a pH of 12.0. The ammonia gas developed is captured by a system of pipes and blown into acid water. The subsequent steps of the process provide to add a coagulant agent that promotes the formation of flakes inside the excreta, to separate the flocculated solid portion from the liquid portion by decantation, to add agents (MgCl₂, MgSO₄, MgCO₃) forming struvite and coagulants to the liquid fraction in order to further purify it. Struvite is a compound consisting of phosphorus and magnesium, and is very insoluble in water. The solid and liquid fractions can be used respectively as fertilizer for the fields and for washing. US-B-7,410,589 provides to add an alkaline agent and flocculant to the pig manure, but obtaining a pH of 12.0 would cause volatilization of most of the nitrogen, preventing the conversion of most of it into inorganic nitrogen. The addition of a high quantity of alkaline agent as in US-B-7,410,589 would entail a greater conversion of volatile solids into soluble COD, facilitating the danger of losing organic material in the form of CO₂. Furthermore, in US-B-7,410,589 the ammonia is recovered during the hydrolytic phase and the phosphorus is recovered by formation and precipitation of struvite with the addition of magnesium.

Document EP-A-2.208.712 (EP'712) describes a plant for the production of biogas, consisting of three tanks in which the phases of hydrolysis, acidification, acetogenesis and methanogenesis take place in succession. Each tank is characterized by process pH and temperatures that are regulated differently to facilitate the specific bacterial flora; for each tank a net is prepared that covers the surface area at a due distance, in which the bacterial flora proliferates, and is therefore defined as resident. The heating plant is also inside the tanks and covers the surface area. In EP'712 the reactors are heated by coils annexed to the internal surfaces of the reactor, at a distance of 20-70 cm, and at a distance from the anchoring net of the bacteria of 5-70 cm. The organic mass is taken to make perimeter movements due to the central mixer and to the heating due to the coils.

Another section is associated with the plant in EP'712, in which organic material, mineral salts and water are recovered. The process described in EP'712, which is applied to vegetable material and organic excreta, requires the intervention of many bacterial families, each of which lives and reproduces at specific pH and temperatures and times of residence that differ from family to family. The steps for obtaining the production of biogas are hydrolysis, acidogenesis, acetogenesis and methanogenesis, where acetogenesis and methanogenesis are carried out in different reactors. In EP'712 the hydrolytic step occurs in aerobiosis and preferentially with oxygen blown in and the acetogenesis step is maintained with pH greater than or equal to 6.0.

Other limitations and disadvantages of conventional solutions and technologies will be clear to a person of skill after reading the remaining part of the present description with reference to the drawings and the description of the forms of embodiment that follow, although it is intended that the description of the state of the art correlated to the present description must not be considered an admission that what has been described here is already known in the prior state of the art.

Document US-A-2008/277336 (US'336) describes a digestor for the production of biogas having: a floor that supports the walls and a roof supported by the walls, where the roof is higher than the level of liquid inside the container, creating a head space that functions as a storage for the gas above the liquid and below the roof; an entrance to receive the liquid excreta inside the container; an exit for the spent liquid; a wall that extends inside the wall of the digestor, which wall forms a flow path for the liquid excreta, from entrance to exit; the flow path flows in a first direction on a first side of the wall and in a second direction on a second side of the wall; an access door in the roof, which includes a sleeve having a first aperture located under the maximum level of the liquid inside the container, and a second aperture located outside the container of the digestor. US'336 provides that the animal excreta is transported from the farm area to the treatment plant, to be transferred to a heat exchanger where, if necessary, it is heated using tepid water from the clarifier. US'336 provides to use a modified stream of effluent to move it, unlike other state-of-the-art techniques. The pipes for heating the digestor heat the sludge locally with hot water at 71 °C (160°F) from the cooling system of the motor, forcing the heated sludge to rise thanks to the convective forces. Convection develops an uncharacteristic current in the digestor for ordinary digestors that work with a high dry substance. The sludge is heated by the heating pipes of the digestor that are near the central wall of the digestor, so that the convective forces force the heated sludge to rise near the central wall. At the same time, the sludge near the colder external wall falls under the convective forces. The convective forces force the sludge to follow a circular path upward along the central wall and downward along the external wall.

Document US-B-8,673,046 (US'046) describes a process to selectively remove the phosphorus, not the nitrogen, from poultry manure or more generally animal excreta, excreta which by their very nature also contain phosphorus and carbon. The process described in US'046 comprises a step of acid hydrolysis, at a temperature between 35°C and 55°C, in which the excreta is mixed with acid having a pH comprised between 3.0 and 5.0 in order to obtain a liquid that contains soluble phosphorus and a solid that contains phosphorus but in the form connected to nitrogen, a step of separating the liquid from the solid, mixing the liquid with an alkaline-earth base to reach a pH between 8.0 and 11.0, mixing the liquid with a flocculant to facilitate the precipitation of solid particles of phosphorus, and separating the precipitates of phosphorus and obtaining phosphorus in a solid form and a liquid. The process is carried out at temperatures between 5°C and 50°C.

Document WO-A-2013/060338 describes a method for anaerobic fermentation and production of biogas, which provides two hydrolyses, an initial one, less strong, and a second one in which lime is added and temperatures of more than 100°C are used, and pressures from 2 to 20 bar. The method provides to form ammonia fluids that are condensed and absorbed in a separate unit. The organic material subjected to high-pressure cooking is conveyed to a tank where the pH value is adjusted, and mixed from time to time with other organic material not subjected to cooking. Then, the organic material is conveyed to an anaerobic digestor.

There is therefore a need to perfect a plant and method for treating poultry manure which can overcome at least one of the disadvantages of the state of the art.

The Applicant has devised, tested and embodied the present invention to overcome the shortcomings of the state of the art and to obtain these and other purposes and advantages.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

### SUMMARY OF THE INVENTION

The present invention is set forth and characterized in the independent claim, while the dependent claims describe other characteristics of the invention or variants to the main inventive idea.

According to the present disclosure, a plant is provided for treating poultry manure. The plant for treating poultry manure includes:
- an apparatus for the first treatment of the poultry manure, configured to carry out dilution, homogenization and hot, damp alkaline hydrolysis of the diluted poultry manure and to supply at exit a stream of inert materials and a stream of hydrolyzed poultry manure;
- a second treatment unit configured to carry out a flocculation of the stream of hydrolyzed poultry manure and to supply a steam of hydrolyzed and flocculated poultry manure;
- a solid-liquid separation unit configured to separate the stream of hydrolyzed and flocculated poultry manure into a solid fraction suitable for anaerobic digestion and a liquid fraction;
- a liquid post-treatment unit of the liquid fraction supplied by the solid-liquid separation unit configured to recover water, ammonium sulfate and salts from the liquid fraction.

According to the present invention, a method is provided for treating poultry manure. According to one form of embodiment, the method for treating poultry manure includes:
- a first treatment for the dilution of the poultry manure and homogenization and hot, damp alkaline hydrolysis of the diluted poultry manure by means of an alkaline hydrolysis agent to supply at exit a stream of inert materials and stream of hydrolyzed poultry manure;
- a second treatment to carry out a flocculation of the stream of hydrolyzed poultry manure and to supply a stream of hydrolyzed and flocculated poultry manure;
- a solid-liquid separation to separate the stream of hydrolyzed and flocculated poultry manure into a solid fraction suitable for anaerobic digestion and a liquid poultry manure into a solid fraction suitable for anaerobic digestion and a liquid fraction;
- a liquid post-treatment of the liquid fraction to recover water, ammonium sulfate and salts from the liquid fraction.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a block diagram of forms of embodiment of a plant according to the present description;
- fig. 2 is a block diagram of forms of embodiment of a method according to the present description;
- fig. 3 is a block diagram of other forms of embodiment of a plant according to the present description;
- fig. 4 is a block diagram of other forms of embodiment of a plant according to the present description;
- fig. 5 is a block diagram of still other forms of embodiment of a plant according to the present description;
- fig. 6 is a block diagram of other forms of embodiment of a plant according to the present description.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF A FORM OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

All the percentages and ratios indicated refer to the weight of the total composition, unless otherwise indicated. All the measurements are made, unless otherwise indicated, at 25°C and at atmospheric pressure. All the temperatures, unless otherwise indicated, are expressed in degrees Centigrade.

All the intervals reported here shall be understood to include the extremes, including those that report an interval "between" two values. Terms such as "about", "generally", "substantially" and suchlike shall be understood with their function of modifying a term or value that is not absolute, but is not reported in the state of the art. Such terms shall be defined by the specific circumstances and by the terms that they are intended to modify according to the common acceptance of such terms in the specific field. They shall take into account at least the degree of experimental error expected, the technical error and the instrumental error for a given technique adopted to measure a value. Unless otherwise indicated, in the present description, singular forms such as "a", "an" and "one" shall be understood to include plural forms, unless the context suggests otherwise.

Before describing these forms of embodiment, we must also clarify that the present description is not limited in its application to details of the construction and disposition of the components as described in the following description using the attached drawings. The present description can provide other forms of embodiment and can be obtained or executed in various other ways. We must also clarify that the phraseology and terminology used here is for the purposes of description only, and cannot be considered as limitative.

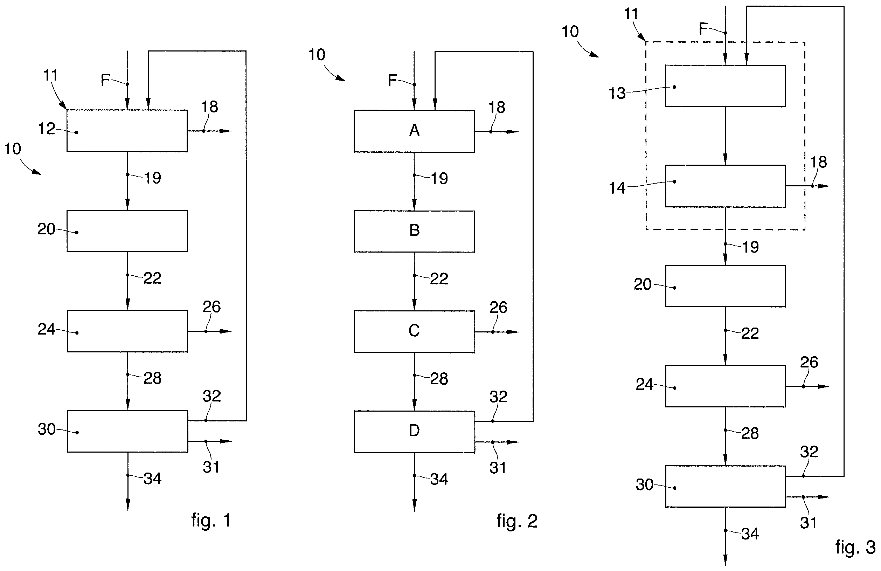

Forms of embodiment described using figs. 1, 3, 4, 5 and 6, and combinable with all the forms of embodiment described here, provide a plant 10 for treating poultry manure which includes:
- an apparatus for the first treatment 11 of the poultry manure, configured to carry out dilution, homogenization and hot, damp alkaline hydrolysis of the diluted poultry manure and to supply at exit a stream of inert materials 18 and a stream of hydrolyzed poultry manure 19;
- a second treatment unit 20 configured to carry out a flocculation of the stream of hydrolyzed poultry manure 19 and to supply a steam of hydrolyzed and flocculated poultry manure 22;
- a solid-liquid separation unit 24 configured to separate the stream of hydrolyzed and flocculated poultry manure 22 into a solid fraction 26 suitable for anaerobic digestion and a liquid fraction 28;
- a liquid post-treatment unit 30 of the liquid fraction 28 supplied by the solid-liquid separation unit 24 configured to recover water 32, ammonium sulfate 31 and salts 34 from the liquid fraction 28.

Forms of embodiment described using fig. 2, and combinable with all the forms of embodiment described here, provide a method for treating poultry manure, which includes:
- a first treatment A for the dilution of the poultry manure and homogenization and hot, damp alkaline hydrolysis of the diluted poultry manure to supply at exit a stream of inert materials 18 and stream of hydrolyzed poultry manure 19;
- a second treatment B to carry out a flocculation of the stream of hydrolyzed poultry manure 19 and to supply a stream of hydrolyzed and flocculated poultry manure 22;
- a solid-liquid separation C to separate the stream of hydrolyzed and flocculated poultry manure 22 into a solid fraction 26 suitable for anaerobic digestion and a liquid fraction 28;
- a liquid post-treatment D of the liquid fraction 28 to recover water 32, ammonium sulfate 31 and salts 34 from the liquid fraction 28.

In figs. 1, 2, 3, 4, 5 and 6 the arrow F indicates the entrance or feed of the poultry manure to be treated.

Forms of embodiment described here provide, in particular, a method for treating poultry manure, which includes:
- the first treatment A for the dilution of the poultry manure and homogenization and hot, damp alkaline hydrolysis of the diluted poultry manure and abatement of inert materials (stream of inert materials 18),
- the second treatment B to obtain a solid fraction 26, which can be sent to anaerobic digestion, and a liquid fraction 28, using a flocculant and a solid-liquid separation C, by means of the solid-liquid separation unit 24,
- the liquid post-treatment D to recover, from the liquid fraction 28 deriving from the solid-liquid separation C, part of the water used in the first treatment A and the second treatment B (water recovery 32) and to obtain sub-products usable as soil improvers/fertilizers (recovery of ammonium sulfate 31 and recovery of salts 34).

In possible implementations, the solid-liquid separation unit 24 can be a suitable centrifuge, or a decanter.

In some forms of embodiment, the first treatment A provides a dilution of the poultry manure with water in the first treatment apparatus 11 simultaneously with a shredding/homogenization of the matrix and with the pumping thereof into the first treatment apparatus 11, in which the hot, damp alkaline hydrolysis is performed.

In some forms of embodiment, described using fig. 1, the first treatment apparatus 11 can provide a single first treatment vat 12 in which the dilution, homogenization and hot, damp alkaline hydrolysis are performed. These operations can be carried out in sequence.

In other forms of embodiment, described using fig. 3, the first treatment apparatus 11 can provide a dilution unit 13, and a separate unit or vat for homogenization and hot, damp alkaline hydrolysis 14. In the unit or vat for homogenization and hot, damp alkaline hydrolysis 14 the homogenization and hydrolysis operations can be carried out in sequence.

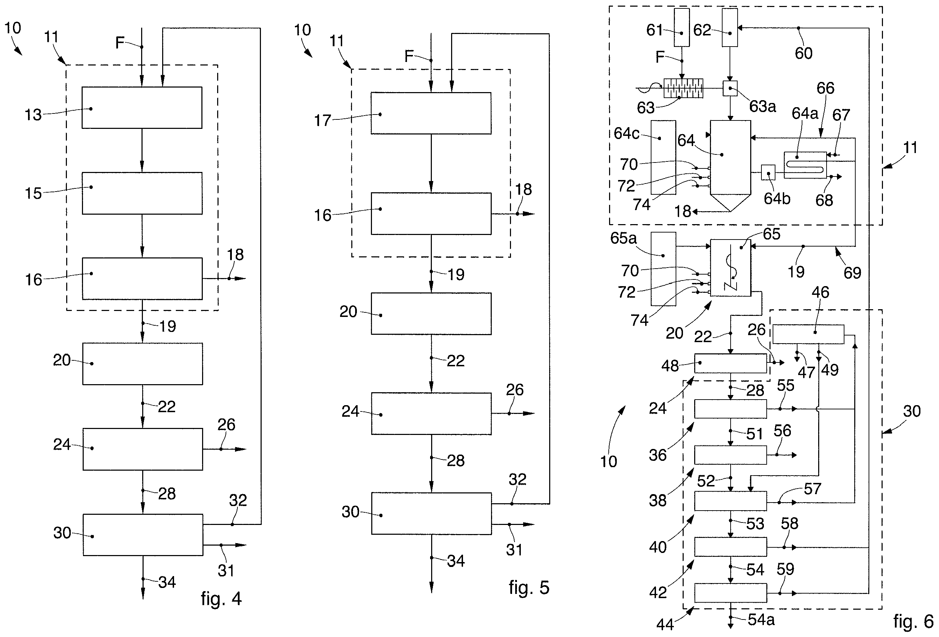

In other forms of embodiment, described using fig. 4, the first treatment apparatus 11 can provide a dilution unit 13 and it can be provided to make a homogenization unit or vat 15, separate from a hot, damp alkaline hydrolysis unit 16, hereafter also called hydrolysis reactor.

In other forms of embodiment, described using fig. 5, the first treatment apparatus 11 can provide a single dilution and homogenization vat 17 and a separate hot, damp alkaline hydrolysis unit 16.

In some forms of embodiment, combinable with all the forms of embodiment described here, the dilution can be carried out indicatively to obtain a percentage of dry substance (% d.s.) of not more than 12%, for example in particular between 9% and 12%, and to maintain a pH around neutral or a little above, for example between 7 and 9, after the addition of alkaline agent for hot, damp alkaline hydrolysis. These conditions (pH) are believed favorable to the hydrolysis balance. If the hydrolysis balance were changed (both poultry manure with respect to water, and vice versa), this would entail modifications to the process, that is, modifications to the stirring of the mass, to the pumping of the mass, to the pH that can be reached, to the quantity of transformation of organic nitrogen into ammoniacal nitrogen and to the quantity of organic substance lost during the process.

In possible implementations, the hot, damp alkaline hydrolysis provides a pH comprised between 7 and 9, in particular higher than 7 and lower than 9.

In some forms of embodiment, combinable with all the forms of embodiment described here, the homogenization step provides a mechanical stirring of the mass to be treated, that is, a mechanical homogenization. The stirring of the mass during the homogenization step before pumping takes place at intense speed.

In some forms of embodiment, combinable with all the forms of embodiment described here, the homogenization/dilution step is done at ambient temperature, therefore the diluted and homogenized effluent is supplied at this temperature, for example with reference to fig. 4 at exit from the homogenization unit 15 or for example with reference to fig. 5 at exit from the dilution and homogenization vat 17.

In forms of embodiment described for example using figs. 4, 5 and 6, combinable with all the forms of embodiment described here, it may be provided to shred/homogenize the poultry manure before it is pumped and sent to the hot, damp alkaline hydrolysis unit 16, or hydrolysis reactor, which allows to shred the feathers, which therefore will no longer entail the problems known in the state of the art.

In some forms of embodiment, a heating system can be provided, associated with the first treatment apparatus 11, to heat the mass to be hydrolyzed and to maintain the temperature during the hydrolysis reaction (T_{hydrolysis}). The heating system can be associated for example with the first treatment vat 12 (see fig. 1), or with the unit for homogenization and hot, damp alkaline hydrolysis 14 (see fig. 3) or with the hot, damp alkaline hydrolysis unit 16 or hydrolysis reactor (see figs. 4 and 5).

In possible implementations, the temperature of the hydrolysis reaction (T_{hydrolysis}) can be advantageously kept above 35°C. From experimental trials, Applicant has determined to work in hydrolysis with a constant temperature of more than 35°C also to ensure the same performance of the process at any time of the year. The choice of temperature at which to operate is also important, because the formation of ammoniacal nitrogen from organic nitrogen is greater as a proportion of the increase in temperature. Applicant has also found that it is preferable that the hydrolysis reaction temperature is not too high, so as not to cause massive degradation of the organic substance.

According to some forms of embodiment, therefore, the possible working temperatures of the present invention can be between 35 and 55°C for dilution and mixing of the poultry manure, and between 35 and 55°C for alkaline hydrolysis; instead, for the subsequent solid-liquid separation with flocculant, filtrations and recovery of nitrogen in the form of ammonium sulfate, the masses are not heated.

In possible forms of embodiment, combinable with all the forms of embodiment described here, the alkaline hydrolysis agent added for the hydrolysis reaction is a hydroxide. This choice allows not to lower the pH, given that temperatures higher than ambient temperature and dilutions of the matrix contribute to starting the hydrolysis reaction of the organic material, hence the development of fatty acids, which would consequently lower the pH.

In possible implementations, the alkaline hydrolysis agent is added to the mixed poultry manure with a determinate ratio in weight (g compound/1 kg poultry manure dry substance). Indicatively, a few hundred grams of the alkaline hydrolysis agent are added for about half a ton of diluted and homogenized poultry manure, for example less than 500 g of alkaline hydrolysis agent for about half a ton of diluted and homogenized poultry manure.

In possible implementations, the conditioning and reaction time of the poultry manure in the hot humid alkaline hydrolysis unit 16, or hydrolysis reactor, is less than 10 hours. Although this is a relatively short time, it allows to decant the inert materials on the bottom of the hot, damp alkaline hydrolysis unit 16 and hence to subsequently remove them, as a stream of inert materials 18.

The stream of inert materials 18 recovered can go to a recovery system, which can provide to wash them, to separate off possible impurities and to re-use the washing waters. Afterward, the inert materials can be sent for re-use in the building trade or in fodder factories.

Applicant has carried out numerous experimental trials to determine the temporal duration of the hydrolysis which will allow to obtain the intended purposes so as to transform most of the organic nitrogen into ammoniacal nitrogen, but simultaneously cause the least possible loss of organic substance and hence of organic carbon.

Moreover, the choice of the alkaline hydrolysis agent and its concentration was made after many experimental trials both so as not to facilitate the lowering of the pH in the hydrolysis reactor, and also so that the transformation of organic nitrogen into ammoniacal nitrogen could proceed, and also to cause the least possible loss of organic carbon that would occur in the form of carbon dioxide in a normal hot hydrolytic process.

In possible implementations, the hydrolysis is carried out by mixing/stirring the mass to be reacted. In particular, hydrolysis takes place in the presence of bland mixing/stirring of the mass to be treated in the hot, damp alkaline hydrolysis unit 16 or hydrolysis reactor. In particular, the bland mixing can allow the alkaline inoculum to enter into contact with the whole mass, and so as not to increase the hydrolysis reaction which, with the incorporation of air and hence faster stirring, would increase in level. Hydrolysis can take place using a blade mixer regulated to a speed of about ½ - 1 rev per second, to obtain a desired bland mixing.

In some forms of embodiment, the second treatment in the second treatment unit 20 provides to use a flocculating agent, in particular of the organic type, more in particular polycationic. After flocculation, the solid-liquid separation step is provided in the solid-liquid separation unit 24 by means of which, with the help of the flocculating agent used in the second treatment and for example a centrifuge, a solid fraction 26 and a liquid fraction 28 can be obtained.

The solid fraction 26 consists of the organic substance of the poultry manure, hence substantially the totality of organic carbon present in the original matrix. The solid fraction 26 still contains a part of nitrogen that has not flowed into the liquid fraction 28. Said nitrogen is mainly in the form of organic nitrogen. After treatment, the conditioned poultry manure that forms the solid fraction 26 has a percentage of carbon on dry substance increased by 7% (following the removal of the inert materials), and the content of nitrogen halved. This makes it the most favorable matrix to be used as aliment in anaerobic digestion plants. Thanks to this conditioning, the C/N ratios obtained with the present invention have a variable increase depending on the initial value: for poultry manures with a very low C/N ratio (1.67 - 3.55) values are obtained of about 9 - 10, whereas for poultry manures with a low C/N ratio (4.2 - 6) values of 12 - 14 are obtained.

In the liquid fraction 28, on the contrary, we find a low percentage of carbon (for example about 0.44% of the raw material) and a high concentration of nitrogen (for example about 3 g/L), almost totally in ammonia form. Applicant has calculated that the percentage of total nitrogen flowing into the liquid fraction 28 is on average 45-50% of that initially present in the poultry manure.

The advantage of using a polycationic flocculating agent in the second treatment in the second treatment unit 20 which facilitates the subsequent solid-liquid separation is given by its capacity to capture the organic material in suspension and to thicken it into lumps to promote the permeation of the liquid and to retain it in the solid fraction 26 with the highest possible value of dry substance. It is therefore possible to thicken the organic material and make it flow into the liquid fraction 28. This limits the loss of the organic substance to irrelevant values, especially of the carbon, the presence of which in the liquid fraction 28 would otherwise entail a more difficult recovery of nitrogen and water in the liquid post-treatment D.

The ratio of flocculating agent that can be used to treat the mass of hydrolyzed poultry manure (hydrolyzed poultry manure stream 19) is a few hundred grams for less than half a ton of hydrolyzed poultry manure. For example, it is possible to use less than 500g of flocculating agent for about 500 Kg of hydrolyzed poultry manure stream 19.

The second treatment B in the second treatment unit 20 provides to mix the flocculating agent with the hydrolyzed poultry manure stream 19. In possible implementations, the mixing of the hydrolyzed poultry manure with the flocculating agent can have a short duration, for example less than 10 minutes, it can have an intense mixing/stirring speed, and it can take place at ambient temperature. The mixing operation can have a short duration because the ammoniacal nitrogen is by its very nature soluble in an aqueous state, and therefore it needs only a little time to allow it to pass to the aqueous phase. Moreover, a longer duration of the process would cause the flocculated flake to decompose. The choice of working at ambient temperature is due to the fact that the action of the flocculating agent does not vary significantly when said parameter is varied. The time the effluent remains in the second treatment unit 20 for the second treatment unit B, after the mixing time with the flocculating agent, is short compared with the time it remains in the first treatment step for hydrolysis reaction, and can be less than 60 minutes.

After the solid-liquid separation C, the liquid fraction 28 is then sent to the liquid post-treatment step D in the liquid post-treatment unit 30, which functions as a recovery system to recover the fertilized substances and the process water and which, in the different forms of embodiment, can consist of several operating units.

In forms of embodiment described using fig. 6, the liquid post-treatment unit 30 can include:
- a possible pre-filter 36 able to remove coarse impurities from the liquid fraction 28, for example a lamellar pre-filter, to supply a pre-filter permeate 51 and a pre-filter washing stream 55;
- an ammoniacal nitrogen recovery reactor 38 configured to recover ammoniacal nitrogen from the pre-filter permeate 51, to supply a reactor permeate 52 and an ammonium sulfate stream 56,
- an ultra-filtration unit 40 of the reactor permeate 52, to supply an ultra-filtration permeate 53 and an ultra-filtration concentrate 57,
- a first inverse osmosis unit 42, or first osmosis stage, to recover the fertilizing saline solutions and process water from the ultra-filtration permeate 53 and supply a saline concentrate 54 and a first osmosis stage permeate 58,
- a possible second inverse osmosis unit 44, or second osmosis stage, useful for the further concentration of the saline solutions of the saline concentrate 54, to supply a saline super-concentrate 54a, which can correspond to said salt recovery stream 34, and a second osmosis stage permeate 59.

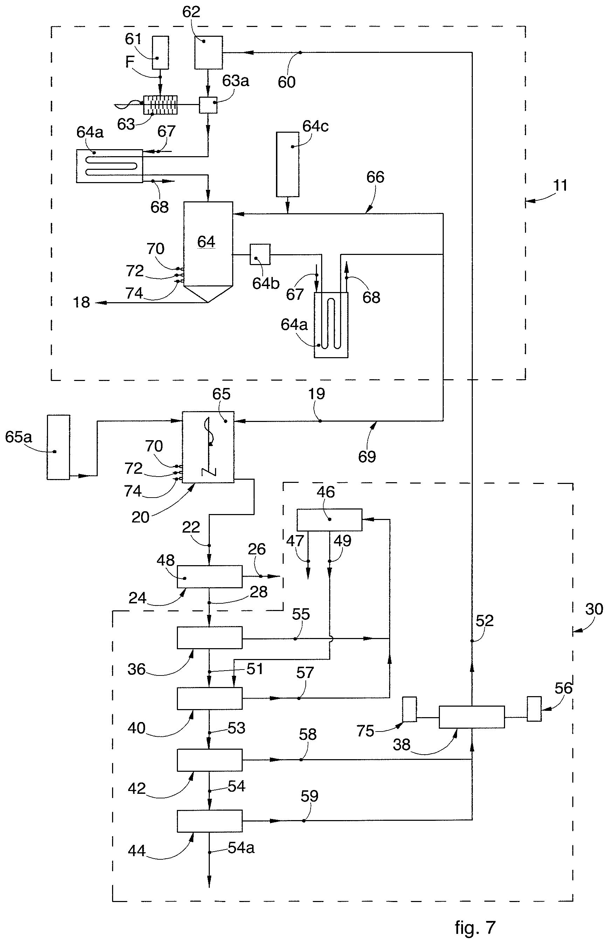

The possible pre-filter 36, the ammoniacal nitrogen recovery reactor 38, the ultra-filtration unit 40, the first inverse osmosis unit 42 and the possible second inverse osmosis unit 44 are put in sequence in this order or, for example as described with reference to fig. 7, the ultra-filtration unit 40 is directly downstream of the possible pre-filter 36 and the ammoniacal nitrogen recovery reactor 38 is downstream of the first inverse osmosis unit 42 and the possible second inverse osmosis unit 44.

It is clear that, if only the first inverse osmosis unit 42 is provided, and not the second inverse osmosis unit 44, the saline concentrate 54 in some forms of embodiment may correspond to the salt recovery stream 34.

In forms of embodiment described using fig. 6, the liquid post-treatment D provides a possible pre-filtering of the liquid fraction 28, recovery of ammoniacal nitrogen, ultra-filtration, first inverse osmosis and possible second inverse osmosis.

According to forms of embodiment described here, the first osmosis stage permeate 58 and/or the second osmosis stage permeate 59 can be re-circulated, for example as a stream of water 60 to the head of the plant 10, to supply the dilution water used during the first treatment in the first treatment apparatus 11. The stream of water 60 can correspond to the stream of recovery water 32 of forms of embodiment described using figs. 1, 2, 3, 4 and 5. The recovered water (stream of water 60/recovery water 32) can also be used in addition to or as an alternative to the preparation of the flocculating agent, and/or for use in the services of the plant 10.

According to forms of embodiment described here, the liquid post-treatment unit 30 can include another solid-liquid separation unit 46, such as for example a centrifuge, which can receive the pre-filter washing stream 55 from the pre-filter 36 and the ultra-filtration concentrate 57 from the ultra-filtration unit 40. At exit from the other solid-liquid separation unit 46 a solid fraction 47 and a liquid fraction 49 are provided. For example, the liquid fraction 49 can be re-introduced inside the ultra-filtration unit 40, whereas the solid fraction 47 can be sent to anaerobic digestion.

The ammoniacal nitrogen recovery reactor 38 used in the liquid post-treatment D allows to obtain the ammonium sulfate stream 56 by volatilizing the ammoniacal nitrogen into ammonia and by capturing the latter in a solution of sulfuric acid. The reactor permeate 52 exiting from the ammoniacal nitrogen recovery reactor 38, from which 70% of ammoniacal nitrogen has been removed, can therefore be sent for concentration. The ammonium sulfate stream 56 exiting from the ammoniacal nitrogen recovery reactor 38 can correspond to the recovery of ammonium sulfate 31 of forms of embodiment described using figs. 1, 2, 3, 4, 5 and 6. The ammoniacal nitrogen recovery reactor 38 can be for example a contactor.

The ultra-filtration unit 40 that receives the reactor permeate 52 supplies the ultra-filtration concentrate 57 since it has the capacity to concentrate the residual organic substance in the liquid and part of the nitrogen, for example in a 3.5% solution of dry substance or 6% solution of dry substance which, depending on the C/N ratio, can be sent for anaerobic digestion, after possibly passing to said solid-liquid separation unit 46. With respect to the liquid to be concentrated, the volume of the ultra-filtration concentrate 57 is about 20%; the transfer of nitrogen and carbon in the concentrate is also indicatively 20% of that present in the reactor permeate 52 exiting from the ammoniacal nitrogen recovery reactor 38.

In some forms of embodiment, to give value to the ultra-filtration concentrate 57 and to recover the organic material, it can be provided to send it to the solid-liquid separation unit 46, possibly together with the pre-filter washing stream 55. The solid fraction 47 obtained can be sent directly to anaerobic digestion, while the liquid fraction 49 can be sent to the same ultra-filtration unit 40.

The ultra-filtration permeate 53 exiting from the ultra-filtration unit 40 therefore still contains a part of ammoniacal nitrogen to be recovered, and given that it contains all the salts and the residual macro- and micro-elements, it can be sent to the first inverse osmosis unit 42 which concentrates it, for example at least three times. This allows to have as products a saline concentrate 54 which includes mineral salts, and the first osmosis stage permeate 58 which contains water purified of both nitrogen and the salts themselves. The water of the first osmosis stage permeate 58 can be re-used in the plant 10 to dilute the poultry manure at entry, and/or to prepare the flocculating agent, and/or to prepare the sulfuric acid solution usable in the ammoniacal nitrogen recovery reactor 38.

In possible forms of embodiment, to obtain a greater quantity of purified water, the second inverse osmosis unit 44 can be provided, to which the saline concentrate 54 obtained from the first inverse osmosis unit 42 can be made to flow.

We believe that the plant 10 and method according to the present description allow numerous advantages compared with the state of the art. First of all, the plant 10 and method according to the present description allow to enhance every single component of the poultry manure, reducing to a minimum the losses of organic substance and carbon. To this purpose, the extraction of the active nitrogen, that is, with continuous stirring, allows to convert most of the organic nitrogen into ammoniacal nitrogen in the shortest possible time. It is precisely the short reaction time that is one of the strongpoints of the plant 10 and method according to the present description, since it allows to limit the losses of organic substance in the form of carbon dioxide and nitrogen in the form of ammonia. The stirring is also kept bland, precisely in order to minimize the introduction of air which would promote the hydrolytic process of the organic substance.

If compared with the state of the art described for example in US-A-2007/0101783, we see that in the plant 10 and method according to the present description, both the quantity of water used for the hydrolysis of the poultry manure is considerably less, and also that it is possible to recover a good part of the water used in the process, so that it can be re-used in subsequent cycles of the plant 10.

The almost total elimination of the inert material is particularly advantageous, since this could cause problems to the anaerobic digestion plants for which the treated poultry manure is intended.

As far as the nitrogen recovery step is concerned, the capture of the ammonia in the ammoniacal nitrogen recovery reactor 38 occurs without the addition of alkalis, since in the liquid to be treated the nitrogen is completely in ammonia form. It can be provided to increase the process temperature in order to promote the conversion of ammoniacal nitrogen into ammonia gas. Furthermore, thanks to this technique, the formation of nitrates is prevented, since nitrifying bacteria are not used for the transformation of the ammoniacal nitrogen.

Other advantages over the state of the art, for example with reference to the content of US-A-8,637,304, are that, by avoiding the stripping of carbon dioxide and the use of photo-bioreactors, there is no loss of carbon. The plant 10 and method according to the present description are in fact intended exclusively for animal excreta, in particular poultry excreta, with the purpose of conditioning it and making it digestible in anaerobic digestion without losing the carbon source. Furthermore, since no use is made of microorganisms, no inhibitions are caused to them by the ammonia.

Fig. 6 is used to describe forms of embodiment of the plant 10 according to the present description for treating poultry manure. Forms of embodiment of the plant 10 described using fig. 6, combinable with all the forms of embodiment described here, can include a loading belt, or conveyor belt 61 of the poultry manure to be treated, transported daily to the plant 10. The poultry manure is loaded in a suitable mixer chest 63 which, for example by means of a screw, proceeds to direct the effluent toward a mixer 63a, for example a mixing pump which provides, for functioning, to dilute the poultry manure with diluting water, in particular hot water, which is taken from a storage tank 62. The water in the storage tank 62 can be brought for example from the first inverse osmosis unit 42 and/or the second inverse osmosis unit 44. The diluted poultry manure is then pumped into a first treatment vat 64, or hydrolysis tank.

By means of the first treatment vat 64, the poultry manure can be homogenized. Furthermore, in the first treatment vat 64 the hot, damp alkaline hydrolysis reaction can be carried out.

In particular, the first treatment vat 64 can for example correspond to the first treatment vat 12 of forms of embodiment described using fig. 1, or the unit for homogenization and hot, damp alkaline hydrolysis 14 of forms of embodiment described using fig. 3, or the homogenization unit 15 of forms of embodiment described using fig. 4, or again the dilution and homogenization vat 17 of forms of embodiment described using fig. 5. Moreover, the first treatment vat 64 can also function as a hot, damp alkaline hydrolysis unit 16, or hydrolysis reactor (figs. 4 and 5).

In possible implementations, the first treatment vat 64 can be provided with one or more temperature sensors 70, pH sensors 72 and level sensors 74.

In possible implementations, the first treatment vat 64 can be associated with a homogenizer 64b, in particular a mechanical-type homogenizer/shredder. The diluted effluent can be fed from the first treatment vat 64 to the homogenizer 64b which, once the effluent has been subjected to homogenization/shredding, returns it to the first treatment vat 64.

According to forms of embodiment described using fig. 6, the permanence of the poultry manure in the first treatment vat 64 can be of short duration, but long enough to reduce the effluent to a homogeneous sludge, having a dry substance (d.s.) of not more than 12%, for example in particular between 9% and 12%, and to shred the feathers finely. The homogenization step can also provide to shred the matrix, for example by a suitable pump that sucks up the product from the bottom and conveys it, for example, into four nozzles positioned on two levels of the vat. The homogenization step can last for example about an hour and can be carried out at high pumping speed, about 400 m³/hour, that is, at an intense speed to facilitate the shredding of the feathers and the homogenization of the mass.

Downstream of the homogenizer 64b a heat exchanger 64a can be provided, for example of the type with a bundle of tubes, in particular in counter-flow. Stirring the mass can also allow heating through the heat exchanger 64a. In some variants, described for example with reference to fig. 7, another heat exchanger 64a can be provided upstream of the first treatment vat 64.

In some forms of embodiment, after homogenization and shredding in the homogenizer 64b, the effluent can be pumped to the heat exchanger 64a. The heat exchanger 64a has an entrance 67 for the hot water and an exit 68 for the hot water.

Then, after the dilution/homogenization step, the temperature can be raised, up to an optimum level, making the mass pass through the heat exchanger 64a, and re-circulating it in the first treatment vat 64. The re-circulation from the heat exchanger 64a for the purposes of heating the mass can be carried out with a delivery rate of the pump of at least 200 m³/hour, for less than 10 hours.

In particular, thanks to the heat exchanger 64a downstream of the homogenizer 64b, the effluent can be subjected to heating that takes it to reach temperatures higher than 35°C, for example from 35°C to 55°C, for the hydrolysis reaction. From the heat exchanger 64a the effluent can be again introduced, through the pipe 66, into the first treatment vat 64, where subsequently the hot, damp alkaline hydrolysis reaction can take place. Then, the effluent of diluted poultry manure can first be homogenized/shredded in the first treatment vat 64, by the homogenizer 64b, and then, after being subjected to the action of the latter, is re-introduced into the first treatment vat 64 for hydrolysis.

In possible implementations, a tank vat or inoculum tank 64c is provided for the preparation of the alkaline hydrolysis agent for the hydrolysis reaction, which can be conveyed into the first treatment vat 64 where the hot, damp alkaline hydrolysis reaction can take place.

The conveyor belt 61, the mixer chest 63 associated with the mixer 63a, the first treatment vat 64 associated with the heat exchanger 64a, with the homogenizer 64b and the tank vat 64c can all be part of the first treatment apparatus 11 usable to perform the first treatment A.

The hydrolysis of the poultry manure can last for example no more than 10 hours and, as we said, it needs the addition of the alkaline hydrolysis agent which is prepared in the tank vat 64c. In possible implementations, the alkaline hydrolysis agent can be added to the poultry manure with a ratio of a few hundred grams for a few hundredweight of diluted poultry manure.

The addition of the alkaline hydrolysis agent can be made with a concentration such that it does not cause reductions in the pH below neutral. In fact, during a hydrolytic process, fatty acids develop that entail a lowering of the pH, and a pH below neutral may not facilitate the transformation of organic nitrogen into inorganic nitrogen. The hydrolysis of the poultry manure, moreover, is provided for a few hours only, precisely so as to limit to the utmost the degradation process of the organic substance, to be kept intact as long as possible because it produces biogas during the anaerobic digestion step. During the hydrolysis of the poultry manure, the inert substances, mainly consisting of small stones, precipitate onto the bottom of the first treatment vat 64 in which the hydrolysis reaction can take place, as we said, allowing them to be recovered through the stream of inert materials 18, for example through a conical bottom of the hydrolysis reactor represented by the first treatment vat 64. In particular, the first treatment vat 64 into which the poultry manure is conveyed and in which it must remain for the processing time, can include a tank with a conical bottom and roof. The wall of the tank does not act as a flow path and, in some variants, the liquid can be conveyed to an external heat exchanger 64a and re-introduced inside, for example thanks to the use of a shredding pump, also located outside the first treatment vat 64. The liquid that emerges from the first treatment vat 64 is therefore not spent material.

In some forms of embodiment, during the hydrolysis reaction, the first treatment vat 64 can be stirred blandly, for example about ½ - 1 rev per second, to prevent an excessive contribution of oxygen. In possible implementations, the stirring can be carried out with a blade stirrer provided in the first treatment vat 64.

By means of the hydrolysis reaction during the first treatment A, it is possible to transform as much organic nitrogen as possible into ammoniacal nitrogen, in particular by means of two fundamental parameters, that is, the raising of the temperature and the basic pH. The nitrogen in the poultry manure is 60-70% in organic form (uric acid, urea, indigested proteins), and the remaining is already in inorganic form (ammonium, nitrate, nitrite). By modulating the two parameters cited above, it is possible to transform urea and uric acid into inorganic nitrogen, whereas the transformation of the indigested proteins into inorganic nitrogen would be more complex, and even destructive; it would be necessary to reproduce the processes of the human gastro-intestinal tract, that is, protein denaturation with pH near to 2, use of proteolytic enzymes to break up the denatured proteins into amino acids, use of enzymes metabolizing the amino acids operating at neutral pH. The reproduction of this process on an industrial scale would not only increase the times and complexity of the process but would also require a further use of chemical products (to lower and increase the pH), and enzymatic extracts, thus causing also the degradation of part of the organic substance responsible, in anaerobic digestion, for part of the energy production deriving from methane. With the operating choice according to the present description, which provides a short reaction time, the addition of an alkaline hydrolysis agent so as not to lower the pH below neutral, with the double effect that it does not accelerate the hydrolytic process of the organic substance, but only facilitates the conversion of organic nitrogen into inorganic nitrogen, and which also provides a controlled temperature of above 35°C, the advantage is obtained of having a non-destructive process.

In possible implementations, the effluent corresponding to the stream of hydrolyzed poultry manure 19, after having been subjected to the first treatment A and after a period of time not longer than 10 hours, can be sent, for example at exit from the heat exchanger 64a by means of a pipe 69, to a second treatment vat 65 where it will undergo the second treatment B, in particular flocculation, propaedeutic to the subsequent solid-liquid separation C. The second treatment vat 65 can correspond to the second treatment unit 20 of forms of embodiment described using figs. 1, 3, 4 and 5.

The second treatment vat 65 can be insulated to maintain the temperature. The recirculation of the effluent in the heat exchanger 64a can also contribute to maintaining its temperature. The recirculation can take place by means of the homogenizer 64b and the pipe 66.

After the hydrolytic process, the poultry manure, with a pH still near to neutral, is pumped into the second treatment vat 65 where it undergoes the second treatment B, that is, mixing with a flocculating agent, in particular the organic type, more in particular polycationic. A tank 65a can be provided, associated with the second treatment vat 65, for the preparation of the flocculating agent. In possible implementations, the flocculating agent can be prepared with the dilution of water plus an agent functional to allow the aggregation of the organic material.

In some forms of embodiment, the flocculating agent can be added to the poultry manure in a ratio of a few hundred grams for a few hundredweight of hydrolyzed poultry manure.

It may be provided to stir the mixture in the second treatment vat 65. A stirring system may be provided in the second treatment vat 65. The stirring can be stronger than that of the hydrolytic process, that is, it can go from 2 to 4 revs per second. In the second treatment vat 65 too, the stirring can be carried out with a stirrer with blades.

The mixing in the second treatment vat 65 of the poultry manure with the prepared flocculating agent can take place with a duration of a few minutes, until flakes are formed which would tend to precipitate onto the bottom of the vat if the stirring was not continuous. The flakes thicken the organic substance of the poultry manure. Typically, the thickening reaction of the organic material by the flocculating agent is pH-dependent. A neutral pH of the poultry manure that has undergone hydrolysis in the first treatment A can promote the successful result of the flocculation operation. The process is carried out and maintained at ambient temperature, however the second treatment vat 65 can be provided with insulation.

The flocculated mix, corresponding to the stream of hydrolyzed and flocculated poultry manure, can then be pumped through a pipe to a solid-liquid separator 48, which can correspond to the solid-liquid separation unit 24 of forms of embodiment described using figs. 1, 3, 4 and 5, and can be for example a centrifuge or a decanter. Using the solid-liquid separation unit 24 means that the solid fraction 26 and liquid fraction 28 are obtained.

The solid fraction 26 contains almost all the organic substance and about half the nitrogen initially contained in the poultry manure, almost in organic form.

The solid fraction 26 obtained is a substrate that is more suitable for anaerobic digestion than untreated poultry manure. In fact, ammonia is considered inhibitory for microbic conversion processes, since it spreads in the bacterial cells where it causes an exhaustion of the potassium and a change in the intercellular pH. The concentration of nitrogen that causes a 50% reduction in the methane yield is reported as being comprised between 1.7 - 14 g/L of ammoniacal nitrogen. The methanogen bacteria are less tolerant toward inhibitory agents than microorganisms of the other trophic groups of the anaerobic digestion process, and for this reason stop producing methane in the event of inhibition. The growth rate of acetoclastic methanogens is reduced at low concentrations of ammonia compared with hydrogenotrophic methanogens. This presupposes that in reactors with high concentrations of ammonia the pathways of hydrogenotrophs are predominant.

On the contrary, the liquid fraction 28 contains the other half of nitrogen that the poultry manure loses: this nitrogen is in ammonia form. Apart from nitrogen, the liquid fraction 28 also contains micro- and macro-elements, such as S, K, P and a small percentage of organic substance (C.O.D).

The liquid fraction 28 obtained is then sent to the post-treatment D, by the liquid post-treatment unit 30, where the nitrogen is recovered for the production of a fertilizer (ammonium sulfate stream 56), where the micro- and macro-elements are recovered for the production of saline concentrates (saline concentrate 54 and saline super-concentrate 54a), and where part of the water (water stream 60) is also recovered which, deprived of salts and ammoniacal nitrogen, can be re-used in the process.

In forms of embodiment described using fig. 6, the liquid fraction 28 is initially subjected to filtering, carried out by the pre-filter 36, for example of the type with blades, which promotes the removal of particulate which could damage the ammoniacal nitrogen recovery reactor 38 to which the pre-filter permeate 51 is sent. In the ammoniacal nitrogen recovery reactor 38, by capturing sulfuric acid in solution, the ammoniacal nitrogen is supplied at exit as ammonium sulfate stream 56, which is useful in that it is a known nitrogen fertilizer in agriculture. Ammonium sulfate is one of the chemical products most used as fertilizers and is absorbed in the earth in the form of nitrate, thanks to the activity of nitrifying bacteria present in the ground which transform the ammoniacal nitrogen into nitric nitrogen. The ammoniacal nitrogen recovery reactor 38 can include tubular hydrophobic and microporous membranes that are gas permeable, allowing the ammonia gas to pass through the hydrophobic membranes and be captured with the diluted acid present on the other side of the membrane. The pores of the membrane constitute the transfer area. The difference in the partial pressure of the ammonia between the two liquid phases is the force that guides the mass transfer. Soluble compounds like soluble COD cannot pass through the pores of the membrane. The recovery of ammonium in the ammoniacal nitrogen recovery reactor 38 can even reach 90%. The fact that these membranes are used instead of classic stripping allows to use a smaller quantity of chemical agents and to save energy. Another advantage is that using such membranes to treat a liquid that by now is completely without particles allows a prolonged and continuous use of the membranes, preventing the well-known problem of pore wetting, that is, the loss of hydrophobicity due to the deposit of molecules inside the pores.

The reactor permeate 52 is sent to the ultra-filtration unit 40 to concentrate the residual organic substance in the liquid in the ultra-filtration concentrate 57 which is sent to the other solid-liquid separation unit 46 to remove most of the organic substance present in the ultra-filtration concentrate 57 and send it to anaerobic digestion (solid fraction 47). The liquid fraction 49 exiting from the solid-liquid separation unit 46 is again sent to the ultra-filtration unit 40. The ultra-filtration permeate 53, on the contrary, contains a large part of nitrogen in ammonia form, and also most of the salts. The ultra-filtration permeate 53 is therefore subjected to concentration by inverse osmosis, by the first inverse osmosis unit 42. The saline concentrate 54 thus obtained can be subjected to another concentration process in the subsequent possible second inverse osmosis unit 44, obtaining the saline super-concentrate 54a. The first inverse osmosis unit 42 and the second inverse osmosis unit 44 thus allow to recover a considerable quantity of water without nitrogen, without mineral salts and organic substance (first osmosis stage permeate 58 and second osmosis stage permeate 59) which, as we said before, can be sent to the water storage tank 62 for dilution of the original poultry manure.

In possible implementations, the tanks and vats used in the plant 10 and method according to the present description are made of vitrified stainless steel.

Fig. 7 is used to describe other possible variant forms of embodiment, in which the inoculation of the alkaline agent no longer takes place directly in the first treatment vat, or hydrolysis tank 64, but in the pipe that connects the heat exchanger 64a, for example of the type with a bundle of tubes, with the first treatment vat or hydrolysis tank 64.

In these forms of embodiment, moreover, the nitrogen recovery reactor 38, for example the contactor type, is no longer located in succession to the pre-filter 36, for example of the lamellar type, but after the first inverse osmosis unit 42 and second inverse osmosis unit 44 (see first osmosis stage permeate 58 and second osmosis stage permeate 59). The permeate at exit is made to converge to the head, whereas the ammonium sulfate exits as a final derived product.

Then the nitrogen recovery reactor 38, for example the contactor type, is moved and inserted downstream of the inverse osmosis units 42 and 44. A tank 75 can also be inserted for the sulfuric acid. The pre-filter 36 is thus located in series with the ultra-filtration unit 40. Furthermore, in these forms of embodiment, the pre-filter permeate 51 exiting from the pre-filter 36, for example the lamellar type, is conveyed directly to the ultra-filtration unit 40.

Furthermore, in these forms of embodiment, before the poultry manure, diluted with hot water, is introduced inside the first treatment vat or hydrolysis tank 64, there is another heat exchanger with a bundle of tubes 64a upstream of the first treatment vat 64, in which the poultry manure passes to reach the working temperature. In particular, the second heat exchanger 64a is inserted between the mixer 63a and the first treatment vat 64, while the tank vat, or inoculum tank 64c of the alkaline hydrolysis agent is moved directly onto the pipe 66.

The plant 10 and method according to the present description allow to reduce the content of nitrogen initially present in the poultry manure, to maintain the content of carbon and volatile solids, to abate the pathogen agents, to obtain sub-products usable as fertilizers, to recover part of the water used in the process and to recover the inert material.

The plant 10 and method according to the present description allow to treat poultry manure with various carbon/nitrogen ratios, from a minimum of 1.6 to 6.2, a dry substance varying from 23% to 75%, a composition with litter and raw material, also rich in residues of corn seed, or not.

In particular, the plant 10 and method according to the present description allow to obtain, through conditioning, a matrix that can be used as a single substrate for feeding anaerobic digestion plants, hence with a ratio of the carbon/nitrogen content at least equal to 13. To obtain this purpose, not only do the plant 10 and method according to the present description allow to take away from the poultry manure most of the nitrogen content, but also the reductions in organic substance (mainly in the form of CO₂) are reduced to a minimum.

The plant 10 and method according to the present description allow to eliminate from the poultry manure at least 45-50% of the total nitrogen initially present in it, to keep intact the quantities of carbon and volatile solids, to recover the nitrogen extracted and other minerals in the form of liquid concentrates, and to recover a good part of the process water. The C/N ratios obtained are subjected, thanks to the conditioning, to an increase that varies from 55 to 72%. In particular, from the experiments done, it has been found that from poultry manure having C/N rations of up to 3, conditioned poultry manures are obtained having respectively C/N up to 9; on the contrary, with poultry manures having C/N higher than 3, poultry manures are obtained with C/N even higher than 13.

Furthermore, the plant 10 and method according to the present description allow to remove inert substances, such as stones and feathers, promoting the production of methane and the normal exit of the biogas.

Furthermore, advantageously, with the plant 10 and method according to the present description it is possible to abate the bacterial load contained in the poultry manure to 1/1000, in particular from billions of CFU (Colony Forming Units) to millions of CFU with regard to *E. Coli,* and from millions to thousands for Salmonella. In particular, these results can be imputed to the bactericide action of the ammonia that develops during the hydrolytic phase described hereafter.

Advantageously, the plant 10 and method according to the present description propose to convert as much as possible of the organic nitrogen into inorganic nitrogen and to keep it in the form of ammonium ions as long as possible. On the contrary, document US-B-7,410,589, achieving a pH of 12.0, would cause the volatilization of most of the nitrogen. For this reason, the plant 10 and method according to the present description provide to keep the pH near to neutral. The addition of a higher quantity of alkaline agent as in US-B-7,410,589 would entail a greater conversion of volatile solids into soluble COD, facilitating the danger of loss of organic material in the form of CO₂. Furthermore, after the flocculation of the organic material, the separation of the solid fraction from the liquid fraction proposed in the plant 10 and method according to the present description is more effective, given that by using a centrifuge it is possible to obtain a shovelable solid fraction with a dry substance of even more than 30%, almost totally without any trace of ammoniacal nitrogen, this effect being obtained without losses of nitrogen which on the contrary converges entirely into the liquid fraction. Furthermore, the purification of the liquid fraction, to obtain clean water that can be re-used in the plant 10 and method according to the present description is completely different from what is described in US-B-7,410,589, where the ammonia is recovered during the hydrolytic step instead of with microporous hydrophobic membranes after the flocculation phase, and the phosphorus is recovered by formation and precipitation of struvite with the addition of magnesium, instead of with an inverse osmosis system which is certainly more effective in recovering mineral salts.

Furthermore, unlike EP'712, the plant 10 and method according to the present description are not intended for the production of biogas, but produce an organic matrix from poultry manure intended for external biogas plants, and recover nitrogen for fertilization from poultry manure. Unlike EP'712, in the present invention the poultry manure is subjected to a process of conversion of organic nitrogen to ammoniacal nitrogen; this reaction is facilitated by high temperatures and basic pH, and can be defined as alkaline hydrolysis, but does not advance the hydrolysis process of the organic material which normally takes place in the first step of anaerobic fermentation. The complete hydrolysis of an organic matrix would in fact require times of more than 24 hours and acid pH, whereas in the present description what is defined as hydrolysis lasts less than 6 hours, and has as its objective only the conversion of the organic nitrogen into ammoniacal nitrogen, and takes place at basic pH. Unlike EP'712, which is intended to increase the biogas yield, the present invention provides to control the hydrolytic process in order to prevent the production of biogas.

Moreover, compared with EP'712, in the present invention, during the conversion reaction of the organic nitrogen into ammoniacal nitrogen, called "alkaline hydrolysis", there is no modified atmosphere nor, in particular, blowing in of oxygen and moreover the pH is kept at values just above neutral, for example greater than 7.0 and less than 9.0, hence not in acetogenic conditions. In this way, keeping the pH above the neutral value, there is also an attempt to prevent extracellular enzimes from being active, which are produced by the hydrolytic bacteria and which would have their maximum activity at pH near 6.0.

Unlike EP'712, which intends to increase the yield of biogas (for example methane), the purpose of the present invention is to suitably convert most of the organic nitrogen into ammoniacal nitrogen so as to be able subsequently to remove it from the organic material which can produce methane or biogas in general. The conversion from organic to ammoniacal nitrogen according to the present invention, however, is not done by acidogenic bacteria, but by a chemical reaction promoted by basic pH and high temperatures. On the contrary, with regard to the prior art document US'336, it should be noted that, in this prior art document, there is a digestor between the acid mixing chamber and the separation with pressure. Therefore, the processes have a completely different purpose from acid mixing. Indeed, the digestor renders a spent material without organic substance which has been transformed into biogas. In the present invention, on the contrary, there is no production of biogas but instead one of the objectives for the good result of the process is to prevent the onset of the hydrolysis reaction with the production of fatty acids and CO₂. In the present invention, the poultry manure, subjected to alkaline hydrolysis for a few hours, is therefore not subjected to the production of fatty acids or CO₂ because this phenomenon is controlled. The poultry manure is sent to a preparation unit with flocculating agent and subsequently to a solid-liquid separation unit, for example with a decanter. In the acid mixing chamber of the process in US'336, the coil with the heating function is inside the chamber. In the present invention, at least one heat exchanger with a bundle of tubes 64a can be provided, located outside the first treatment vat 64 but in any case communicating with it. The entering poultry manure, in the process in US'336, is not diluted with water, whereas in the present invention it is diluted with recovered water. Finally, in the process in US'336, the water recovered from the pressure system that treats the digestate is sent to the digestor to dilute the mass.

It is clear that modifications and/or additions of parts and/or steps may be made to the plant 10 and method for treating poultry manure as described heretofore, without departing from the field of the present invention as defined by the claims.

In some forms of embodiment of the present invention, unlike EP'712, the first treatment vat 64 or tank or reactor for hot, damp alkaline hydrolysis, can be provided as we said above, supplied or associated with two heat exchangers with a bundle of tubes 64a, one upstream and one downstream of the first treatment vat 64 (see fig. 7). The poultry manure, already diluted with hot water, passes in the first heat exchanger 64a to be taken to the process temperature and sent to the first treatment vat 64 or tank or reactor for hot, damp alkaline hydrolysis; in the second heat exchanger 64a, for example by means of a shredding recirculation pump of the homogenizer 64b, outside the first treatment vat 64, the poultry manure in hydrolysis passes in order to maintain the process temperature. As we said, the material entering the first treatment vat 64 can be suitably diluted, for example up to a percentage of dry substance not higher than 12%, comprised for example between 9% and 12%. From inside the first treatment vat 64 the poultry manure is forced to enter inside the tube of the heat exchanger 64a downstream, and is again conveyed to the first treatment vat 64. This takes place for the duration of the reaction, for example about 6 hours, and not only allows to heat the manure but also to move it. According to a variant, therefore, before the poultry manure, diluted with hot water, is introduced inside the first treatment vat 64, there is a heat exchanger 64a upstream, for example with a bundle of tubes, in which the poultry manure passes to reach the working temperature.

In a variant, the poultry excreta in its unaltered state, for example arriving from the loading mixer chest 63, can fall into the hopper of a shredder, for example a shredder with blades, where it meets a stream of hot water for dilution. In the present invention, unlike EP'712, no dilution is provided either with animal waste or with osmotic concentrate, so as not to generate a further nitrogen load to the poultry manure. Subsequently, the poultry excreta passes for example through a holed plate with rotating blades with the function of homogenization and separation of foreign bodies. After this, as we said, the poultry excreta descends into the mixer 63a, such as a mixer pump, and is sent through the first heat exchanger 64a to reach the process temperature, to the first treatment vat 64. By means of a second shredding and homogenization pump, which can be part of the homogenizer 64b, the poultry manure is removed from the first treatment vat 64 and made to pass through the second heat exchanger 64a to maintain the process temperature and from here is re-introduced into the first treatment vat 64 (see fig. 7).

In forms of embodiment described here, in loading, the mass of poultry manure can be mixed with heated water (stream of water 60 associated with the permeate 58 and 59) arriving from the inverse osmosis 42 and 44. The pipes and tanks can advantageously be insulated so as to prevent heat loss from the water. The material is shredded by the loading pump and mixed with water; before the hydrolysis process, the poultry manure-water mixture is heated by the heat exchanger with a bundle of tubes 64a upstream, outside the first treatment vat 64; in conjunction with the hydrolytic process, the poultry manure is subjected to subsequent shredding by means of a shredding pump which homogenizes and conveys the mass in hydrolysis toward the second heat exchanger 64a downstream, outside the first treatment vat 64; for example by means of a pump, the heated poultry manure returns inside the first treatment vat 64 (see fig. 7).

We must point out that in the present invention, after the first treatment vat 64 for hot, damp alkaline hydrolysis, there is no acid-acetogenic phase. The hydrolytic phase in the present invention is the phase in which the organic nitrogen is converted partly into ammoniacal nitrogen, which solubilizes in the more liquid part of the extraction mixture. The unit after the hydrolytic phase can be defined as the separation unit, since it separates the solid material containing mainly organic nitrogen from the liquid material containing mainly ammoniacal nitrogen. The nitrogen reduction system of the present invention is based on a separation of the solid stream from the liquid, carried out by the separation unit, for example a decanter. Most of the ammoniacal nitrogen and the salts are present in the liquid stream. In particular, the solid-liquid separation can provide a preliminary preparation of the biomass exiting from hydrolysis, with a polycationic agent, which facilitates the flocculation of the organic material and therefore facilitates the solid-liquid separation. This operation serves to separate the organic material from the liquid material, which contains ammoniacal nitrogen. The organic material is intended, for example, to be sold to external anaerobic digestion plants not as a source of bacteria but rather as a source of carbon. The liquid exiting from the separation unit can be subjected to a series of filtrations. The liquid contains the soluble salts and most of the nitrogen converted into ammoniacal nitrogen and can have a dry substance for example of 2%.

According to some forms of embodiment, the suspended material obtained after the first lamellar pre-filtration (pre-filter 36) is sent for example to a centrifuge. In particular, at exit from the centrifuge it will be added to the solid exiting from the first decanter or solid-liquid separation unit. The liquid exiting from the lamellar pre-filtration is sent to an ultra-filtration unit 40. Then, according to a variant described here, after the pre-filter 36, the liquid is not sent to the nitrogen recovery unit 38, such as a contactor, but instead to the ultra-filtration unit 40. In order to recover all the residual nitrogen, the nitrogen recovery unit 38, such as a contactor, is located downstream of the inverse osmosis units 42 and 44 (see fig. 7).

According to some forms of embodiment, from the first inverse osmosis unit 42 there is a production of a permeate and a concentrate. The concentrate contains almost all the nitrogen and mineral salts and, for example, can be sent to industries for the production of fertilizers. It is therefore possible to insert a second inverse osmosis unit downstream of the first inverse osmosis unit, to which, instead of the permeate, the concentration exiting from the first inverse osmosis unit is sent. This allows to recover a greater volume of permeate. On the contrary, the permeate can be sent to a nitrogen recovery unit 38, which can be defined by a nitrogen recovery reactor, like a contactor (see fig. 7). Therefore, in some possible variant forms of embodiment, a nitrogen recovery reactor 38, such as a contactor, can be inserted downstream of the inverse osmosis units 42 and 44 to recover the residual nitrogen present in the permeate exiting from inverse osmosis, so as to be certain to produce a permeate without ammoniacal nitrogen. In possible implementations, the nitrogen recovery reactor 38, such as a contactor, can be a nitrogen recovery unit, which uses hydrophobic membranes which allow contact between liquid phases. In particular, the liquid phases that are intended to enter into contact are the liquid permeate and a solution of sulfuric acid. The ammonia ions present in the permeate pass through the membrane into the solution of sulfuric acid, producing ammonium sulfate. As this process gradually continues, the permeate becomes poor in ammonium, and the solution of ammonium sulfate becomes richer and richer in this salt, until a concentration is reached such that it can be marketed. The nitrogen recovered with the nitrogen recovery reactor 38, such as a contactor, in the form of ammonium sulfate can be used for agronomic purposes, as can the nitrogen contained in the saline concentrate exiting from osmosis.

Some forms of embodiment described here differ from EP'712 in at least one or more of the following aspects:
- in EP'712, the material is fragmented in series with loading, whereas in the present invention the shredding can be a consequence of the homogenization and loading;
- in the present invention, which is not intended for the production of biogas, there is neither a bioreactor nor a digestor, and hence there is no nitrogen eliminator between the two units, nor a gasometer for storing the biogas produced;
- in EP'712 the hydrolysis unit follows the fragmentation unit, however the first treatment vat 64 for hot, damp alkaline hydrolysis according to the present invention has another function and different operating parameters, such as the addition of alkalis, higher temperatures and shorter duration;
- in EP'712 there is a concentration made with a decanter at the end of anaerobic digestion, whereas in the present invention the solid-liquid separation unit, such as a decanter, can be positioned after a preparation unit in which a flocculating agent is added;
- in EP'712 the concentrate obtained with the decanter is re-introduced into the bioreactor, whereas in the present invention the concentrate can be sent to external anaerobic digestion plants;
- in EP'712 the filtrate is sent to a filtration system, but in EP'712 there is a press-filter, which operates in parallel to the decanter whereas according to the present invention there is no press-filter but a solid-liquid separation unit, such as for example a decanter. Furthermore, in EP'712 the filtrates exiting from the decanter and from the press-filter are sent to a first filtration unit which produces a retentate and a permeate, and the permeate is sent to an inverse osmosis unit; instead, in the present invention, the filtrate exiting from the solid-liquid separation unit, such as for example a decanter, goes to a lamellar pre-filter unit (pre-filter 36), subsequently to an ultra-filtration unit 40 and subsequently to at least one inverse osmosis unit 42 and 44;
- in EP'712, the concentrate exiting from inverse osmosis is sent to the initial loading unit or to a second inverse osmosis unit, whereas the permeate is disposed of in surface waters. On the contrary, in variants of the present invention the concentrate can be subjected to a second inverse osmosis and the permeates sent to the nitrogen recovery reactor 38, such as a contactor; on the contrary, the permeates exiting from the nitrogen recovery reactor 38, such as a contactor, can be introduced at the start of loading the water to dilute the poultry manure.

## Claims

1. Method for treating poultry manure, **characterized in that** it comprises:
- a first treatment (A) for the dilution of the poultry manure and homogenization and hot, damp alkaline hydrolysis of the diluted poultry manure by means of an alkaline hydrolysis agent to supply at exit a stream of inert materials (18) and stream of hydrolyzed poultry manure (19);
- a second treatment (B) to carry out a flocculation of the stream of hydrolyzed poultry manure (19) and to supply a stream of hydrolyzed and flocculated poultry manure (22);
- a solid-liquid separation (C) to separate the stream of hydrolyzed and flocculated poultry manure (22) in a solid fraction (26) suitable for anaerobic digestion and a liquid fraction (28);
- a liquid post-treatment (D) of the liquid fraction (28) to recover water (32, 60), ammonium sulfate (31, 56) and salts (34, 54, 54a) from the liquid fraction (28).

2. Method as in claim 1, **characterized in that** the homogenization in the first treatment (A) obtains a percentage of dry substance between 9% and 12%, and keeps a pH around neutral after the addition of a hot, damp alkaline hydrolysis agent.

3. Method as in claim 1 or 2, **characterized in that** the homogenization in the first treatment (A) is a mechanical homogenization.

4. Method as in claim 1, 2 or 3, **characterized in that** the homogenization and the dilution in the first treatment (A) are at ambient temperature.

5. Method as in any of the claims from 1 to 4, **characterized in that** the temperature at which said hot, damp alkaline hydrolysis is carried out is higher than 35°C.

6. Method as in any of the claims from 1 to 5, **characterized in that** the alkaline hydrolysis agent is a hydroxide.

7. Method as in any of the claims from 1 to 6, **characterized in that** the alkaline hydrolysis agent is used in a ratio of less than 500 g of alkaline hydrolysis agent to about 500 kg of diluted and homogenized poultry manure.

8. Method as in any of the claims from 1 to 7, **characterized in that** the hydrolysis time is less than 10 hours.

9. Method as in any of the claims from 1 to 8, **characterized in that** the hydrolysis provides to mix the diluted and homogenized poultry manure.

10. Method as in any of the claims from 1 to 9, **characterized in that** said second treatment (B) provides to use a flocculating agent, in particular of the organic type, more in particular polycationic.

11. Method as claim 10, **characterized in that** the flocculating agent is used in a ratio of less than 500 g of flocculating agent to 500 kg of hydrolyzed poultry manure stream (19).

12. Method as in claim 10 or 11, **characterized in that** the second treatment (B) provides a mixture of flocculating agent with the stream of hydrolyzed poultry manure (19) lasting less than 10 minutes at ambient temperature.

13. Method as in any of the claims from 1 to 12, **characterized in that** said liquid post-treatment (D) provides possible pre-filtration of the liquid fraction (28), recovery of nitrogen ammonia, ultra-filtration, first inverse osmosis and possible second inverse osmosis.

14. Method as in any of the claims from 1 to 13, **characterized in that** the dilution and the homogenization in the first treatment (A) are provided to obtain a percentage of dry substance between 9% and 12%, and to keep a pH between 7 and 9, after the addition of an alkaline hydrolysis agent for a hot, damp alkaline hydrolysis.

## Patentansprüche

1. Verfahren zur Behandlung von Geflügelmist, **dadurch gekennzeichnet, dass** es umfasst:
- eine erste Behandlung (A) zur Verdünnung des Geflügelmistes und zur Homogenisierung und zur heißen, feuchten alkalischen Hydrolyse des verdünnten Geflügelmistes durch ein alkalisches Hydrolysemittel zur Lieferung am Ausgang eines Stroms von inerten Stoffen (18) und eines Stroms von hydrolysiertem Geflügelmist (19);
- eine zweite Behandlung (B) zur Durchführung einer Flockung des Stroms von hydrolisiertem Geflügelmist (19) und zur Lieferung eines Stroms von hydrolysiertem und geflocktem Geflügelmist (22);
- eine Feststoff-Flüssigkeitstrennung (C) zur Trennung des Stroms von hydrolysiertem und geflocktem Geflügelmist (22) in einen Feststoffanteil (26), der für die anaerobe Gärung geeignet ist, und in einen Flüssigkeitsanteil (28);
- eine Flüssigkeitsnachbehandlung (D) des Flüssigkeitsanteils (28) zur Rückgewinnung von Wasser (32, 60), Ammoniumsulfat (31, 56) und Salzen (34, 54, 54a) aus dem Flüssigkeitsanteil (28).

2. Verfahren nach Anspruch 1, **dadurch gekennzeichnet, dass** die Homogenisierung in der ersten Behandlung (A) einen Prozentsatz an Trockensubstanz zwischen 9% und 12% erzielt und einen pH-Wert nach dem Zusatz eines heißen, feuchten alkalischen Hydrolysemittels ungefähr neutral hält.

3. Verfahren nach Anspruch 1 oder 2, **dadurch gekennzeichnet, dass** die Homogenisierung in der ersten Behandlung (A) eine mechanische Homogenisierung ist.

4. Verfahren nach Anspruch 1, 2 oder 3, **dadurch gekennzeichnet, dass** die Homogenisierung und die Verdünnung in der ersten Behandlung (A) bei Raumtemperatur erfolgen.

5. Verfahren nach einem der Ansprüche 1 bis 4, **dadurch gekennzeichnet, dass** die Temperatur, bei der die heiße, feuchte alkalische Hydrolyse durchgeführt wird, höher als 35°C ist.

6. Verfahren nach einem der Ansprüche 1 bis 5, **dadurch gekennzeichnet, dass** das alkalische Hydrolysemittel ein Hydroxyd ist.

7. Verfahren nach einem der Ansprüche 1 bis 6, **dadurch gekennzeichnet, dass** das alkalische Hydrolysemittel in einem Verhältnis von weniger als 500 g alkalischem Hydrolysemittel zu ungefähr 500 kg verdünntem und homogenisiertem Geflügelmist verwendet wird.

8. Verfahren nach einem der Ansprüche 1 bis 7, **dadurch gekennzeichnet, dass** die Hydrolysezeit weniger als 10 Stunden beträgt.

9. Verfahren nach einem der Ansprüche 1 bis 8, **dadurch gekennzeichnet, dass** die Hydrolyse vorsieht, den verdünnten und homogenisierten Geflügelmist zu mischen.

10. Verfahren nach einem der Ansprüche 1 bis 9, **dadurch gekennzeichnet, dass** die zweite Behandlung (B) vorsieht, ein Flockungsmittel, insbesondere ein organisches Flockungsmittel, und insbesondere ein polykationisches Flockungsmittel, zu verwenden.

11. Verfahren nach Anspruch 10, **dadurch gekennzeichnet, dass** das Flockungsmittel in einem Verhältnis von weniger als 500 g Flockungsmittel zu 500 kg hydrolysiertem Geflügelmiststrom (19) verwendet wird.

12. Verfahren nach Anspruch 10 oder 11, **dadurch gekennzeichnet, dass** die zweite Behandlung (B) eine Mischung von Flockungsmittel mit dem Strom von hydrolysiertem Geflügelmist (19), die weniger als 10 Minuten dauert, bei Raumtemperatur vorsieht.

13. Verfahren nach einem der Ansprüche 1 bis 12, **dadurch gekennzeichnet, dass** die Flüssigkeitsnachbehandlung (D) eine mögliche Vorfiltration des Flüssigkeitsanteils (28), eine Rückgewinnung von Stickstoffammoniak, eine Ultrafiltration, eine erste Umkehrosmose und eine mögliche zweite Umkehrosmose vorsieht.

14. Verfahren nach einem der Ansprüche 1 bis 13, **dadurch gekennzeichnet, dass** die Verdünnung und die Homogenisierung in der ersten Behandlung (A) vorgesehen sind, um einen Prozentsatz an Trockensubstanz zwischen 9% und 12% zu erzielen und einen pH-Wert zwischen 7 und 9, nach dem Zusatz eines alkalischen Hydrolysemittels für eine heiße, feuchte alkalische Hydrolyse zu halten.

## Revendications

1. Méthode de traitement de fumier de volaille, **caractérisée en ce qu'**elle comprend :
- un premier traitement (A) pour la dilution du fumier de volaille et l'homogénéisation et l'hydrolyse alcaline chaude et humide du fumier de volaille dilué au moyen d'un agent d'hydrolyse alcaline afin de fournir à la sortie un flux de matières inertes (18) et un flux de fumier de volaille hydrolysé (19) ;
- un deuxième traitement (B) pour effectuer une floculation du flux de fumier de volaille hydrolysé (19) et fournir un flux de fumier de volaille hydrolysé et floculé (22) ;
- une séparation solide-liquide (C) pour séparer le flux de fumier de volaille hydrolysé et floculé (22) en une fraction solide (26) adaptée pour une digestion anaérobie et une fraction liquide (28) ;
- un post-traitement liquide (D) de la fraction liquide (28) pour récupérer de l'eau (32, 60), du sulfate d'ammonium (31, 56) et des sels (34, 54, 54a) à partir de la fraction liquide (28).

2. Méthode selon la revendication 1, **caractérisée en ce que** l'homogénéisation dans le premier traitement (A) permet d'obtenir un pourcentage de substance sèche compris entre 9 % et 12 %, et de maintenir un pH à peu près neutre après l'ajout d'un agent d'hydrolyse alcaline chaude et humide.

3. Méthode selon la revendication 1 ou 2, **caractérisée en ce que** l'homogénéisation dans le premier traitement (A) est une homogénéisation mécanique.

4. Méthode selon la revendication 1, 2 ou 3, **caractérisée en ce que** l'homogénéisation et la dilution dans le premier traitement (A) sont à température ambiante.

5. Méthode selon l'une quelconque des revendications 1 à 4, **caractérisée en ce que** la température à laquelle ladite hydrolyse alcaline chaude et humide est effectuée est supérieure à 35°C.

6. Méthode selon l'une quelconque des revendications 1 à 5, **caractérisée en ce que** l'agent d'hydrolyse alcaline est un hydroxyde.

7. Méthode selon l'une quelconque des revendications 1 à 6, **caractérisée en ce que** l'agent d'hydrolyse alcaline est utilisé selon un rapport de moins de 500 g d'agent d'hydrolyse alcaline pour environ 500 kg de fumier de volaille dilué et homogénéisé.

8. Méthode selon l'une quelconque des revendications 1 à 7, **caractérisée en ce que** le temps d'hydrolyse est inférieur à 10 heures.

9. Méthode selon l'une quelconque des revendications 1 à 8, **caractérisée en ce que** l'hydrolyse fournit le mélange du fumier de volaille dilué et homogénéisé.

10. Méthode selon l'une quelconque des revendications 1 à 9, **caractérisée en ce que** ledit deuxième traitement (B) prévoit l'utilisation d'un agent de floculation, en particulier de type organique, plus particulièrement polycationique.

11. Méthode selon la revendication 10, **caractérisée en ce que** l'agent de floculation est utilisé selon un rapport de moins de 500 g d'agent de floculation pour 500 kg de flux de fumier de volaille hydrolysé (19).

12. Méthode selon la revendication 10 ou 11, **caractérisée en ce que** le second traitement (B) fournit un mélange d'agent de floculation avec le flux de fumier de volaille hydrolysé (19) d'une durée inférieure à 10 minutes à la température ambiante.

13. Méthode selon l'une quelconque des revendications 1 à 12, **caractérisée en ce que** ledit post-traitement liquide (D) permet une pré-filtration de la fraction liquide (28), une récupération de l'azote ammoniacal, une ultrafiltration, une première osmose inverse et éventuellement une seconde osmose inverse.

14. Méthode selon l'une quelconque des revendications 1 à 13, **caractérisée en ce que** la dilution et l'homogénéisation dans le premier traitement (A) sont fournies pour obtenir un pourcentage de substance sèche compris entre 9 % et 12 % et pour maintenir un pH entre 7 et 9, après l'ajout d'un agent d'hydrolyse alcaline pour une hydrolyse alcaline chaude et humide.
